# EUROPÄISCHE PATENTANMELDUNG

(11) **EP 4 043 754 A1**
(43) Veröffentlichungstag der Anmeldung: **17.08.2022**
(21) Anmeldenummer: 21157156.7
(22) Anmeldetag: 15.02.2021
(51) Int. Cl.: F16H 1/48, F16H 57/04, F16H 1/46

(54) **PLANETENTRÄGERANORDNUNG, PLANETENGETRIEBE, ANTRIEBSSTRANG, WINDKRAFTANLAGE UND COMPUTERPROGRAMMPRODUKT**

(71) Anmelder: Flender GmbH, 46395 Bocholt (DE)
(72) Erfinder: Bröcker, Sarah, 46395 Bocholt (DE); Böing, Alfons, 46499 Hamminkeln (DE); Degeling, Markus, 46414 Rhede (DE); König, Christian, 44805 Bochum (DE)
(74) Vertreter: Michalski Hüttermann & Partner Patentanwälte mbB

(57) **Zusammenfassung**

Die Erfindung betrifft eine Planetenträgeranordnung (30), die eine Schmierstoffabgabeeinheit (40) zur Abgabe von Schmierstoff (45) in einen Planetenträger (10) umfasst. Erfindungsgemäß weist die Schmierstoffabgabeeinheit (40) einen axial elastisch beweglichen Druckring (42) zu einem Ausgleich eines Axialversatzes (39) des Planetenträgers (10) auf. Die Erfindung betrifft auch ein Planetengetriebe (20), das zumindest eine Planetenstufe (11, 21) umfasst, in der eine solche Planetenträgeranordnung (30) angeordnet ist. Gleichermaßen betrifft die Erfindung einen Antriebsstrang (60) mit einem Getriebe (62), das als ein derartiges Planetengetriebe (20) ausgebildet ist und eine Windkraftanlage (70) mit solch einem Antriebsstrang (60). Die Erfindung betrifft auch ein Computerprogrammprodukt (80) zum Simulieren eines Betriebsverhaltens einer erfindungsgemäßen Planetenträgeranordnung (30).

## Beschreibung

Die Erfindung betrifft eine Planetenträgeranordnung, die eine einem Planetengetriebe einsetzbar ist, und ein derartiges Planetengetriebe. Die Erfindung betrifft ebenso einen Antriebsstrang, der ein solches Planetengetriebe aufweist. Ebenso betrifft die Erfindung eine Windkraftanlage, die über einen derartigen Antriebsstrang verfügt, und ein Computerprogrammprodukt, mit dem das Betriebsverhalten einer erfindungsgemäßen Planetenträgeranordnung simulierbar ist.

Die Patentschrift US 8,636,615 B2 offenbart ein Planetengetriebe für eine Windkraftanlage, das über eine eingangsseitige Planetenstufe mit einem Planetenträger verfügt. Der Planetenträger ist beidseitig in einem Planetenträgerlager drehbar gelagert und an einer generatorseitigen Nabe mit einem Schmierstoffaufsatz versehen. Der Schmierstoffaufsatz ist unmittelbar benachbart zum generatorseitigen Planetenträgerlager positioniert. Am Schmierstoffaufsatz sind auf seiner Außenseite Dichtungsringe angeordnet, die mit einer Schmierstoffabgabe zusammenwirken.

Aus der Druckschrift EP 1 488 139 B1 ist eine Planetenträger in einem Getriebe einer Windkraftanlage bekannt, der über eine Gehäusewandung mit Öl versorgt wird. Im Bereich einer Wange des Planetenträgers wird Öl über einen dort angebrachten Ring mit einem U-Profil von der Gehäusewandung in den Planetenträger übergeben.

Das Dokument WO 2020/001942 A1 offenbart ein Planetengetriebe, das für eine Windkraftanlage geeignet ist und drei Planetenstufen aufweist. Die Planetenstufen können dabei fünf oder mehr Planetenräder aufweisen.

Planetengetriebe werden in einer Vielzahl von Anwendungen eingesetzt, in denen steigende Nennleistungen und Nenndrehmomente zu übertragen sind. Hierzu werden Schmierstoffversorgungen benötigt, die auch unter Betriebsbedingungen mit hohen vorliegenden Drehmomenten zuverlässig funktionieren. Dies gilt insbesondere für die Schmierstoffversorgung von Planetenträgern. Gleichzeitig besteht der Wunsch nach wartungsfreundlichen Planetengetrieben, die kosteneffizient herstellbar sind. Der Erfindung liegt die Aufgabenstellung zugrunde, eine Planetenträgeranordnung bereitzustellen, die in zumindest einem der beschriebenen Punkte eine Verbesserung bietet.

Die Aufgabenstellung wird durch eine erfindungsgemäße Planetenträgeranordnung gelöst. Die Planetenträgeranordnung Planetenträger, der drehbar in einem Gehäuse angeordnet ist, und eine Schmierstoffabgabeeinheit. Die Schmierstoffabgabeeinheit ist dazu ausgebildet, einen Schmierstoff, beispielsweise ein Öl, an den Planetenträger abzugeben, und kann dazu mit dem Gehäuse verbunden sein. Alternativ kann die Schmierstoffabgabeeinheit mit dem Planetenträger verbunden sein. Der Schmierstoff ist im Planetenträger weiterleitbar zur Schmierstoffversorgung weiterer Komponenten, die mit dem Planetenträger verbunden sind oder zusammenwirken. Derartige Komponenten werden in einem Schmierstoffsystem auch als Verbraucher aufgefasst. Erfindungsgemäß umfasst die Schmierstoffeinheit einen axial elastisch beweglichen Druckring, der im Folgenden auch nur kurz als Druckring bezeichnet wird. Unter einer axial elastischen Beweglichkeit gehört, dass der Druckring durch eine Rückstellkraft, die sich durch ein Bewegen des Druckrings entlang einer Axialrichtung ergibt, in eine Ausgangsposition zurückstrebt. Der axial elastisch bewegliche Druckring ist dadurch zu einem Ausgleich eines Axialversatzes des Planetenträgers ausgebildet. Der Axialversatz des Planetenträgers ist durch einwirkende Betriebslasten und/oder Toleranzketten hervorrufbar. Durch das Ausgleichen des Axialversatzes des Planetenträgers wird ein Verlust von Schmierstoff zwischen dem axial elastisch beweglichen Druckring und dem Planetenträger minimiert oder verhindert. Die erfindungsgemäße Planetenträgeranordnung ist zur Verwendung in Planetengetrieben geeignet, die Axialversätze des Planetenträgers erlauben und gleichzeitig minimale Verluste von Schmierstoff erfordern. Darüber hinaus erlaubt die erfindungsgemäße Planetenträgeranordnung auch einen Radialversatz und/oder ein Verkippen des Planetenträgers. Durch den axial elastisch beweglichen Druckring sind in Axialrichtung bei der Herstellung auch erhöhte Toleranzen am Planetenträger und der Schmierstoffabgabeeinheit möglich, ohne die Dichtwirkung zwischen diesen zu beeinträchtigen. Dies wiederum erlaubt eine kosteneffiziente Herstellung der erfindungsgemäßen Planetenträgeranordnung.

In einer Ausführungsform der beanspruchten Planetenträgeranordnung umfasst die Schmierstoffabgabeeinheit einen Stator, der fest mit dem Gehäuse verbunden ist, und durch den der Schmierstoff geleitet wird. Zwischen dem axial elastisch beweglichen Druckring und dem Stator kann zumindest ein Federelement angeordnet sein, das dem Druckring seine axial elastische Beweglichkeit verleiht. Als Federelement kann hierbei jegliche Komponente dienen, die eine technisch nutzbare Elastizität und Rückstellkraft bietet. Alternativ oder ergänzend kann das Federelement auch eine mit Schmierstoff gefüllte hydraulische Vorrichtung sein, die einen vorhandenen Schmierstoffdruck zur Federung und/oder Dämpfung nutzt. Federelemente bieten über eine erhöhte Lebensdauer hinweg eine hinreichende Rückstellkraft, so dass ein dauerhaft zuverlässiger Betrieb gewährleistet ist. Ebenso sind Federelemente in einer Vielzahl von Größen und Federstärken einfach verfügbar und erlauben so eine präzise Einstellbarkeit für die Rückstellkraft. In einer weiteren Ausführungsform können auch mehrere Federelemente zwischen dem axial elastisch beweglichen Druckring und dem Stator angeordnet sein. Die beanspruchte Planetenträgeranordnung ist hierdurch auf unterschiedliche Größen skalierbar, in denen erhöhte Rückstellkräfte auf den axial elastisch beweglichen Druckring erforderlich sind. Die Federelemente können ferner entlang einer Umfangsrichtung des Stators beabstandet, insbesondere gleichmäßig beabstandet, angeordnet sein und so ein durchgängiges Anliegen des axial elastischen Druckrings am Planetenträger gewährleisten. Insbesondere sind durch Federelemente Verkippungen des Druckrings ausgleichbar.

Des Weiteren kann am Planetenträger ein Dichtring angeordnet sein, der zu einem Aufnehmen von Schmierstoff aus dem axial elastisch beweglichen Druckring ausgebildet ist. Dazu kann der Dichtring zwischen dem Planetenträger und dem axial elastische beweglichen Druckring angeordnet sein. Über den Dichtring ist ein Kontaktbereich zwischen dem Planetenträger und dem axial elastisch beweglichen Druckring herstellbar, der zwischen diesen einen Radialversatz und/oder Verkippungen erlaubt. Der Dichtring ist in einfacher Weise dazu ausbildbar, auch bei erhöhten Radialversätzen einen zuverlässigen Transport von Schmierstoff in den Planetenträger zu gewährleisten. Der Dichtring kann aus einem Werkstoff hergestellt sein, der günstige Verschleißeigenschaften in Kontakt mit dem axial elastisch beweglichen Druckring aufweist, beispielsweise aus einem Gleitwerkstoff, insbesondere einer Kupferlegierung, oder einem Kunststoff. Eine Werkstoffauswahl für den axial elastisch beweglichen Druckring, den Dichtring, den Stator und/oder den Planetenträger ist dadurch weitestgehend frei. Folglich sind für diese Komponenten besonders geeignete Werkstoff auswählbar, was für die beanspruchte Planetenträgeranordnung eine gesteigerte Lebensdauer und gesteigerte Zuverlässigkeit bietet. Ferner erfordern lediglich Flächen am axial elastisch beweglichen Druckring und am Dichtring eine präzise Bearbeitung, so dass diese eine hinreichende Dichtwirkung und/oder Gleitwirkung bieten. Der axial elastisch bewegliche Druckring und der Dichtring sind verglichen mit dem Gehäuse oder dem Planetenträger relativ kleine und leichte Komponenten, die deutlich einfacher in der Handhabung sind. Der Fertigungsaufwand für die beanspruchte Planetenträgeranordnung ist hierdurch verringert. Der Dichtring kann drehfest mit dem Planetenträger verbunden sein oder lose am Planetenträger aufliegen.

In einer weiteren Ausführungsform der beanspruchten Planetenträgeranordnung kann die Schmierstoffabgabeeinheit zumindest ein Befestigungsmittel umfassen, durch das der axial elastische bewegliche Druckring gegenüber dem Stator gegen Verdrehen gesichert ist. Das Befestigungsmittel kann beispielsweise als Schraube oder Bolzen ausgebildet sein, durch den eine Drehung des axial elastisch beweglichen Druckrings blockiert wird. Das zumindest Befestigungsmittel kann in Umfangsrichtung benachbart zu einem axialen Schmierstoffkanal im axial beweglichen Druckring oder zwischen solchen positioniert sein. Analog kann das zumindest eine Befestigungsmittel auch in Umfangsrichtung benachbart zu einem Federelement oder zwischen solchen angeordnet sein. Die beanspruchte Planetenträgeranordnung erlaubt es, durch Verwendung einer Mehrzahl von Befestigungsmitteln auch gegen erhöhte Kräfte ein Verdrehen des axial elastisch beweglichen Druckrings zu minimieren oder zu verhindern. Alternativ kann das Befestigungsmittel dazu ausgebildet sein, ein Verdrehen des axial elastische beweglichen Druckrings zu erlauben und nur dessen Beweglichkeit in Axialrichtung zu begrenzen.

Darüber hinaus kann zwischen einer radialen Außenfläche des axial elastisch beweglichen Druckrings und dem Stator zumindest ein Dichtelement angeordnet sein. Das Dichtelement kann beispielsweise als Elastomer-Ring, insbesondere als O-Ring, ausgebildet sein. Durch das Dichtelement wird zwischen dem Stator und dem axial elastisch beweglichen Druckring ein Verlust von Schmierstoff zwischen diesen minimiert oder verhindert. Das Dichtelement ist durch seine Positionierung auf der radialen Außenfläche dazu geeignet, auch bei einer Bewegung des Druckrings entlang der Axialrichtung zuverlässig eine Dichtwirkung hervorzurufen. In einer weiteren Ausführungsform der beanspruchten Planetenträgeranordnung können auch zumindest zwei axial beabstandete Dichtelemente an der radialen Außenfläche des axial elastisch beweglichen Druckrings angeordnet sein. Zwischen den zumindest zwei Dichtelementen kann eine Abgabeöffnung ausgebildet sein, durch die Schmierstoff aus dem Stator in den axial elastisch beweglichen Druckring förderbar ist. Analog kann das mindestens eine Dichtelement auch an einer radialen Innenfläche eines Stators der Schmierstoffabgabeeinheit angeordnet sein. Dadurch ist eine im Wesentlichen gleichwirkende Alternative verfügbar. Auch Kombinationen hiervon sind möglich. Des Weiteren erlauben O-Ring auch einen Radialversatz des Planetenträgers und/oder Verkippungen des Planetenträgers.

Ferner kann der Planetenträger der beanspruchten Planetenträgeranordnung zumindest auf einer seiner Seiten lagerfrei im Gehäuse aufgenommen sein. Die beanspruchte Planetenträgeranordnung erlaubt durch die axial elastische Beweglichkeit des Druckrings einen Ausgleich von Axialversätzen des Planetenträgers. Der Kontakt zwischen dem axial elastisch beweglichen Druckring und dem Planetenträger erlaubt einen Ausgleich von Radialversätzen zwischen diesen. Dementsprechend sind Lager, beispielsweise Wälzlager oder Gleitlager, die den Planetenträger auf der der Schmierstoffabgabeeinheit zugewandten Seite im Gehäuse fixieren, entbehrlich. Dies ermöglicht es, im Planetenträger eine erhöhte Anzahl an Planetenrädern, insbesondere fünf oder mehr, aufzunehmen, die über Gleitlager gelagert sind und durchgängig eine ausreichende Schmierstoffversorgung erfordern. In solchen Planetenträgern ist eine sich selbsttätig einstellende Lastverteilung zwischen den Planetenrädern umsetzbar. Dies wiederum erlaubt in der beanspruchten Planetenträgeranordnung eine verbesserte Materialausnutzung. Bevorzugt ist der Planetenträger der beanspruchten Planetenträgeranordnung auch auf einer der Schmierstoffabgabeeinheit abgewandten Seite lagerfrei im Gehäuse aufgenommen. Dadurch werden die skizzierten Vorteile in erhöhtem Maße erzielt, insbesondere eine gesteigerte Kosteneffizienz und Wartungsfreundlichkeit.

In einer weiteren Ausführungsform der beanspruchten Planetenträgeranordnung kann der axial elastisch bewegliche Druckring einer Nabe des Planetenträgers gegenüberliegend angeordnet sein. Insbesondere kann sich der axial elastisch bewegliche Druckring an einer Stirnfläche der Nabe unmittelbar oder über einen Dichtring axial abstützen. Hierdurch ergibt sich aus der Einbausituation des Planetenträgers zuverlässig ein Anliegen des axial elastisch beweglichen Druckrings am Planetenträger, wodurch im Betrieb durchgehend eine Dichtwirkung hervorgerufen wird. Die Nabe des Planetenträgers kann den Bereich des Planetenträgers mit dem geringsten Durchmesser darstellen. Der axial elastische bewegliche Druckring kann so mit einem verringerten Durchmesser ausgebildet werden. Auch dadurch wird die Zuverlässigkeit der Dichtwirkung zwischen dem axial elastisch beweglichen Druckring und dem Planetenträger bzw. dem Dichtring gesteigert. Die Nabe, der der axial elastisch bewegliche Druckring gegenüberliegend angeordnet ist, kann eine Nabe auf einer Generatorseite, also einer Abtriebsseite, des Planetenträgers sein. Dies erlaubt es, die Länge von externen Ölleitungen am Planetengetriebe gering zu halten. Bei einem Planetenträger, der zumindest auf der der Schmierstoffabgabeeinheit zugewandten Seite lagerfrei im Gehäuse aufgenommen ist, kann auf dieser Seite die Nabe in Axialrichtung verkürzt ausgebildet sein. Dadurch werden zusätzlich Gewichtsersparnis und Bauraumersparnis in Axialrichtung erzielt.

Des Weiteren kann am axial elastisch beweglichen Druckring auf einer dem Planetenträger zugewandten Seite zumindest eine Schmierstofftasche ausgebildet sein. Die zumindest eine Schmierstofftasche kann im Endbereich eines Schmierstoffkanals ausgebildet sein. Dadurch kann nach dem Prinzip einer Schmiertasche in einer Gleitlagerscheibe eine zuverlässige und durchgängige Schmierstoffversorgung des Planetenträgers gewährleistet werden. Der axial elastisch bewegliche Druckring bietet auf seiner Stirnfläche ausreichend Bauraum um eine Mehrzahl von Schmierstofftaschen auszubilden. Schmierstofftaschen sind durch eine einfache spanende Bearbeitung, beispielsweise durch Fräsen, herstellbar. Die Vorzüge der beanspruchten Planetenträgeranordnung sind so in gesteigertem Ausmaß erzielbar. Alternativ oder ergänzend können derartige Schmiertaschen auch am Dichtring und/oder am Planetenträger ausgebildet sein. Mehrere Schmiertaschen können sowohl am Druckring als auch am Dichtring oder Planetenträger miteinander verbunden sein, also ineinander übergehen.

Gleichermaßen kann in der beanspruchten Planetenträgeranordnung der axial elastisch bewegliche Druckring einen lichten Innendurchmesser von mindestens 150 mm aufweisen. Daraus ergibt sich auch ein korrespondierender lichter Innendurchmesser des Planetenträgers im Bereich des axial elastisch beweglichen Druckrings, insbesondere an dessen Nabe auf der der Schmierstoffabgabeeinheit zugewandten Seite, von mindestens 130 mm. Aufgrund eines derartigen lichten Innendurchmessers ist der Planetenträger dazu geeignet, Sonnenräder und/oder Sonnenwellen mit gesteigerten Außendurchmesser aufzunehmen. Dies wiederum ermöglicht die Verwendung einer erhöhten Anzahl an Planetenrädern im Planetenträger. Je mehr Planetenräder im Planetenträger angeordnet sind, umso höher ist deren Bedarf an Schmierstoff und umso bedeutender ist eine zuverlässige Schmierstoffversorgung. Die beanspruchte Planetenträgeranordnung erlaubt insgesamt die Ausbildung von besonders vorteilhaften Planetenstufen in Planetengetrieben.

Darüber hinaus kann in der beanspruchten Planetenträgeranordnung das Federelement als Schraubenfeder, Tellerfeder, Ringfeder, Evolutfeder oder als Elastomerkörper ausgebildet sein. Schraubenfedern sind in einer weiten Spanne an Größen und Federstärken in einfacher Weise verfügbar. Tellerfedern sind durch geeignetes Stapeln präzise zu Tellerfederpaketen mit nahezu beliebigen Federeigenschaften kombinierbar. Zusätzlich sind Tellerfedern kompakt. Ringfedern können aufgrund ihrer hohen Federstärke in der beanspruchten Planetenträgeranordnung auch in kompakten Ausgestaltungen eingesetzt werden. Dies gilt analog für eine Evolutfeder. Elastomerkörper bieten ein hohes Maß an Wirtschaftlichkeit, so dass diese in der beanspruchten Planetenträgeranordnung ohne Weiteres als Verschleißteil auslegbar sind. Der Elastomerkörper kann ferner durch Additive Fertigung, beispielsweise 3D-Druck, hergestellt sein. Dadurch ist ein hohes Maß an Anpassbarkeit gegeben. Bei Verwendung von mehreren Federelementen in der beanspruchten Planetenträgeranordnung sind auch Kombinationen von mehreren Ausführungsformen von Federelementen kombinierbar.

Die zugrundeliegende Aufgabenstellung wird auch durch ein erfindungsgemäßes Planetengetriebe gelöst, das zumindest eine Planetenstufe aufweist. In der Planetenstufe weist zumindest eine Planetenträgeranordnung auf, die in einem Gehäuse des Planetengetriebes angeordnet ist. Erfindungsgemäß ist die Planetenträgeranordnung gemäß einer der oben skizzierten Ausführungsformen ausgebildet. Die technischen Vorzüge der Planetenträgeranordnung werden so auf ein Planetengetriebe übertragen.

In eine Ausführungsform des beanspruchten Planetengetriebes weist das Planetengetriebe zumindest drei Planetenstufen auf. Die drei Planetenstufen können dazu in Reihe hintereinandergeschaltet angeordnet sein. Derartige Planetenstufen sind in der Druckschrift WO 2020/001942 A1 näher beschrieben. Der Offenbarungsgehalt von WO 2020/001942 A1 wird durch Verweisung in die vorliegende Anmeldung mit einbezogen.

Ferner kann im beanspruchten Planetengetriebe eine Planetenträgeranordnung angeordnet sein, in der zumindest drei Planetenräder angeordnet sind. Insbesondere können in der Planetenträgeranordnung auch fünf oder mehr Planetenräder angeordnet sein. Je höher die Anzahl an Planetenrädern in einer Planetenstufe, also einem Planetenträger ist, umso anspruchsvoller ist deren zuverlässige und gleichmäßige Versorgung mit Schmierstoff. Durch die erfindungsgemäße Planetenträgeranordnung wird hierfür eine besonders geeignete Möglichkeit bereitgestellt. Insbesondere können im Planetenträger auch sieben, acht, oder neun Planetenräder angeordnet sein. Hierdurch ist eine gleichmäßigere Lastverteilung auf mehrere Leistungszweige erreichbar, was wiederum den Bau von leistungsfähigeren und gleichzeitig kompakteren Planetengetrieben ermöglicht.

Die oben dargestellte Aufgabenstellung wird ebenso durch einen erfindungsgemäßen Antriebsstrang gelöst. Der Antriebsstrang ist zur Verwendung in einer Windkraftanlage ausgebildet und umfasst ein Getriebe. Das Getriebe ist drehmomentübertragend mit einer Rotorwelle verbindbar, durch die eine Drehbewegung eines Mehrblattrotors übertragen wird. Der Antriebsstrang weist auch einen Generator auf, der drehmomentübertragend mit dem Getriebe verbunden ist. Erfindungsgemäß ist das Getriebe als Planetengetriebe nach einer der oben beschriebenen Ausführungsformen ausgebildet. Die technischen Vorteile der oben skizzierten Erfindung werden dadurch auf einen gesamten Antriebsstrang übertragen, der insgesamt eine erhöhte Leistungsfähigkeit, insbesondere Elektrizitätserzeugungskapazität bietet und gleichzeitig eine gesteigerte Zuverlässigkeit und Lebensdauer aufweist. Der erfindungsgemäße Antriebsstrang ist dadurch beispielsweise zur Verwendung in Offshore-Windkraftanlagen geeignet. Ferner können das Getriebe und der Generator in einem gemeinsamen Gehäuse aufgenommen sein, und so einen Getriebegenerator bilden. Derartige Anordnungen werden auch als Hybrid Drives bezeichnet.

Gleichermaßen wird die eingangs beschriebene Aufgabe durch eine erfindungsgemäße Windkraftanlage gelöst. Die Windkraftanlage umfasst eine Gondel, an der ein Mehrblattrotor drehbar angebracht ist, der drehmomentübertragend mit einem Antriebsstrang verbunden ist. Erfindungsgemäß ist der Antriebsstrang nach einer der oben dargelegten Ausführungsformen ausgebildet.

Die Aufgabenstellung wird ebenso durch ein erfindungsgemäßes Computerprogrammprodukt gelöst, das dazu ausgebildet ist, ein Betriebsverhalten einer Planetenträgeranordnung zu simulieren. Das Computerprogrammprodukt kann dazu ein Physik-Modell aufweisen, in dem die Planetenträgeranordnung zumindest teilweise abgebildet ist. Das Computerprogrammprodukt kann auch über eine Datenschnittstelle verfügen, über die Betriebsbedingungen vorgebbar sind, beispielsweise eine Drehzahl, eine Bewegung eines Planetenträgers, vorliegende Kräfte, vorliegende Versätze und/oder Verkippungen, ein Schmierstoffzufuhrdurchsatz, eine Angabe eines Schmierstoffs oder seiner thermischen, rheologischen oder vergleichbaren Eigenschaften. Auch Materialeigenschaften von Komponenten, wie beispielsweise deren E-Modul, Steifigkeit oder Oberflächenbeschaffenheit können über die Datenschnittstelle vorgebbar sein. Über die Datenschnittstelle sind auch Messdaten von Sensoren ins Physik-Modell eingebbar. Zum Simulieren des Betriebsverhalten kann ein Ermitteln eines Verlusts an Schmierstoff in der Planetenträgeranordnung gehören, der sich aus einer vorliegenden Betriebssituation ergibt. Ferner kann das Computerprogrammprodukt eine Datenschnittstelle zum Ausgeben von Simulationsresultaten an einen Benutzer und/oder andere simulationsgerichtete Computerprogrammprodukte aufweisen. Das Computerprogrammprodukt kann als sogenannter Digitaler Zwilling ausgebildet sein, durch den das Betriebsverhalten der Planetenträgeranordnung abbildbar ist. Digitale Zwillinge sind unter anderen in der Druckschrift US 2017/286572 A1 näher beschrieben. Der Offenbarungsgehalt von US 2017/286572 A1 wird durch Verweisung in die vorliegende Anmeldung mit einbezogen. Das Computerprogrammprodukt kann monolithisch ausgebildet sein, also vollständig auf einer Hardwareplattform ausführbar. Alternativ kann das Computerprogrammprodukt modular ausgebildet sein und eine Mehrzahl an Teilprogrammen umfassen, die auf separaten Hardwareplattformen ausführbar sind und über eine kommunikative Datenverbindung zusammenwirken. Eine solche kommunikative Datenverbindung kann eine Netzwerkverbindung oder eine Internetverbindung sein. Insbesondere kann das Computerprogrammprodukt in einer Computer-Cloud ausführbar ausgebildet sein. Ferner ist durch das erfindungsgemäße Computerprogrammprodukt eine Planetenträgeranordnung per Simulation erprobt und/oder optimiert werden. Ferner sind Messdaten von Sensoren an einer Planetenträgeranordnung und/oder dem zugehörigen Planetengetriebe mittels des Computerprogrammprodukts auf Plausibilität prüfbar. Dadurch ist beispielsweise ein defekter Sensor in der Planetenträgeranordnung und/oder dem entsprechenden Planetengetriebe detektierbar. Alternativ oder ergänzend ist das Computerprogrammprodukt auch zum Detektieren einer defekten Komponente in der Planetenträgeranordnung und/oder dem Planetengetriebe einsetzbar. Zum Detektieren des defekten Sensors und/oder der defekten Komponente kann das Computerprogrammprodukt auch über eine sogenannte Künstliche Intelligenz verfügen, beispielsweise einen selbstlernenden Algorithmus.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine erste Ausführungsform der beanspruchten Planetenträgeranordnung in einem Längsschnitt;
- FIG 2: die erste Ausführungsform in einem weiteren Längsschnitt;
- FIG 3: die erste Ausführungsform in noch einem weiteren Längsschnitt;
- FIG 4: schematisch eine Schrägsicht einer Ausführungsform eines axial elastisch beweglichen Druckring;
- FIG 5: schematisch den Aufbau einer Ausführungsform der beanspruchten Windkraftanlage in einer geschnittenen Schrägansicht.

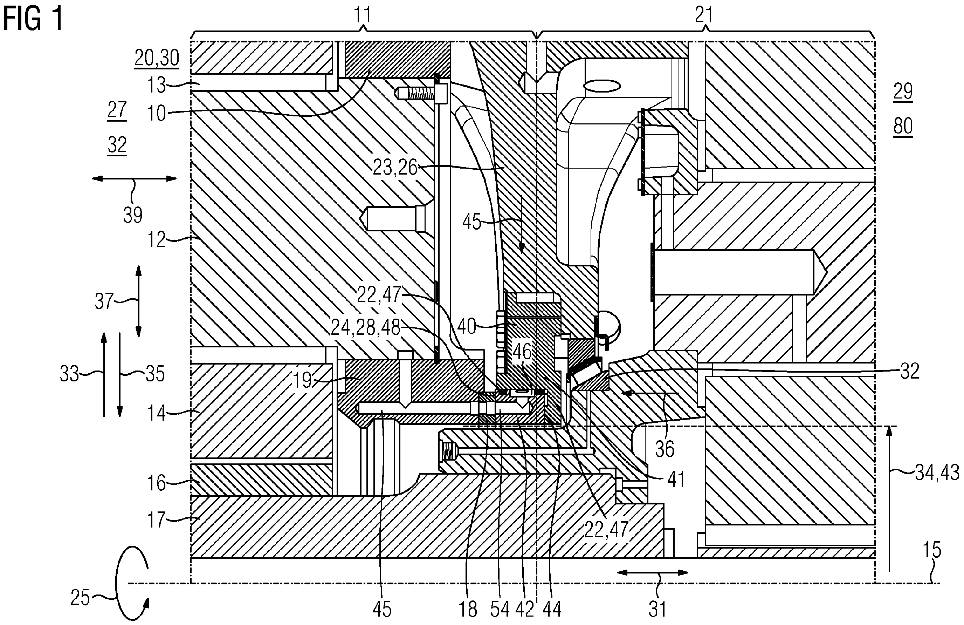

In FIG 1 ist schematisch der Aufbau einer ersten Ausführungsform der beanspruchten Planetenträgeranordnung 30 abgebildet, die in einem Gehäuse 23 eines Planetengetriebes 20 angeordnet ist. Die Planetenträgeranordnung 30 ist in einer ersten Planetenstufe 11 angeordnet, die auf einer Rotorseite 27 des Planetengetriebes 20 liegt. Eine zweite Planetenstufe 21 ist weiter in Richtung einer Generatorseite 29 des Planetengetriebes 20 positioniert, die mit der ersten Planetenstufe 11 zusammenwirkt. Die Planetenträgeranordnung 30 umfasst einen Planetenträger 10, der um eine Hauptdrehachse 15 drehbar ist. Im Planetenträger 10 ist eine Mehrzahl an Planetenradbolzen 12 aufgenommen, auf denen über Gleitlager 13 Planetenräder 14 drehbar sind. Auf den Planetenträger 10 ist über eine nicht näher gezeigte Rotorwelle 62 ein Drehmoment 25 übertragbar, durch das über das Planetengetriebe 20 ein nicht näher gezeigter Generator 64 antreibbar ist. Die Planetenträgeranordnung 30 umfasst auch eine Schmierstoffabgabeeinheit 40, die mit einem Gehäuse 23 des Planetengetriebes 20 verbunden ist. Die Schmierstoffabgabeeinheit 40 umfasst einen Stator 41, der mit einer Wandung 26 des Gehäuses 23 verbunden ist und im Betrieb stationär bleibt. Durch die Wandung 26 des Gehäuses 23 wird durch nicht näher gezeigte Kanäle ein Schmierstoff 45 zum Stator 41 gefördert, der zum Planetenträger 10 zu führen ist.

Die Schmierstoffabgabeeinheit 40 umfasst auch einen axial elastisch beweglichen Druckring 42, der in einem radial inneren Bereich des Stators 41 angeordnet ist. Eine radial innere und radial äußere Richtung sind in FIG 1 auf die Hauptdrehachse 15 bezogen und durch die Pfeile 33 und 35 versinnbildlicht. Zwischen dem axial elastisch beweglichen Druckring 42 und dem Stator 41 ist zumindest ein Federelement 44 angeordnet, durch das auf den axial elastisch beweglichen Druckring 42 eine Rückstellkraft 36 ausgeübt wird. An einer radialen Außenfläche 47 des axial elastisch beweglichen Druckrings 41 sind Dichtelemente 22 angeordnet, die axial benachbart zu einer Zufuhrnut 46 im Bereich des Stators 41 angeordnet sind. Im Betrieb der Planetenträgeranordnung 30 ist Schmierstoff 45 aus dem Stator 41 in die Zufuhrnut 46 leitbar. Von dort ist der Schmierstoff 45 in den axial elastisch beweglichen Druckring 42 leitbar. Durch diesen wiederum ist der Schmierstoff 45 im Wesentlichen in Axialrichtung 31 über zumindest eine Schmierstoffabgabeöffnung 54 in einen Dichtring 18 und den Planetenträger 10 leitbar.

Durch den axial elastisch beweglichen Druckring 42 wird dieser an den Dichtring 18 gedrückt, der drehbeweglich am Planetenträger 10 angeordnet ist. Der Dichtring 18 ist aus einem Gleitwerkstoff, insbesondere einer Kupferlegierung, hergestellt und bildet mit einer dem Stator 41 zugewandten Stirnfläche 24 und einer dem Stator 41 abgewandten Stirnfläche 48 des axial elastisch beweglichen Druckrings 42 eine gleitende Dichtfläche 28. Die gleitende Dichtfläche 28 ist umlaufend ausgebildet und erlaubt dem Planetenträger 10 einen Radialversatz 37, ohne die Dichtwirkung zwischen dem Dichtring 18 und dem axial elastisch beweglichen Druckring 42 zu beeinträchtigen. Dadurch, dass der Druckring 42 in Axialrichtung 31 elastisch beweglich ist, ist dieser dazu geeignet, einem Axialversatz 39 des Planetenträgers 10 im Betrieb zu folgen, und damit den Axialversatz 39 auszugleichen. Dementsprechend ist auch bei einem erhöhten Axialversatz 39 des Planetenträgers 10 eine zuverlässige Schmierstoffversorgung der Gleitlager 13 gewährleistet. Der Planetenträger 10 ist zumindest auf der der Schmierstoffabgabeeinheit 40 zugewandten Seite, insbesondere an der dortigen Nabe 19, lagerfrei im Gehäuse 22 aufnehmbar. In der zweiten Planetenstufe 21 hingegen ist ein solches Lager 32 vorgesehen, das für den Planetenträger 10 der beanspruchten Planetenträgeranordnung 30 entbehrlich ist. Der Planetenträger 10 weist einen lichten Innendurchmesser 34 von zumindest 130 mm auf. Korrespondierend weist der axial elastisch bewegliche Druckring 42 einen lichten Innendurchmesser 43 von mindestens 150 mm auf. Dies erlaubt es, das Sonnenrad 16 und/oder die Sonnenwelle 17, die die erste Planetenstufe 11 mit der zweiten Planetenstufe 21 verbindet, mit entsprechend erhöhten Außendurchmessern auszubilden. Der Planetenträger 10 ist dazu geeignet, sich durch im Betrieb vorliegenden Kräfte und Drehmomente auszurichten und dadurch selbsttägig eine gleichmäßige Lastverteilung auf die Planetenräder 14 einzustellen. Im Planetenträger 10 sind dadurch mindestens drei Planetenräder 14 zuverlässig betreibbar. Die Planetenträgeranordnung 30 ist in einem Computerprogrammprodukt 80 abgebildet, das dazu ausgebildet ist, das Betriebsverhalten der Planetenträgeranordnung 30 zu simulieren.

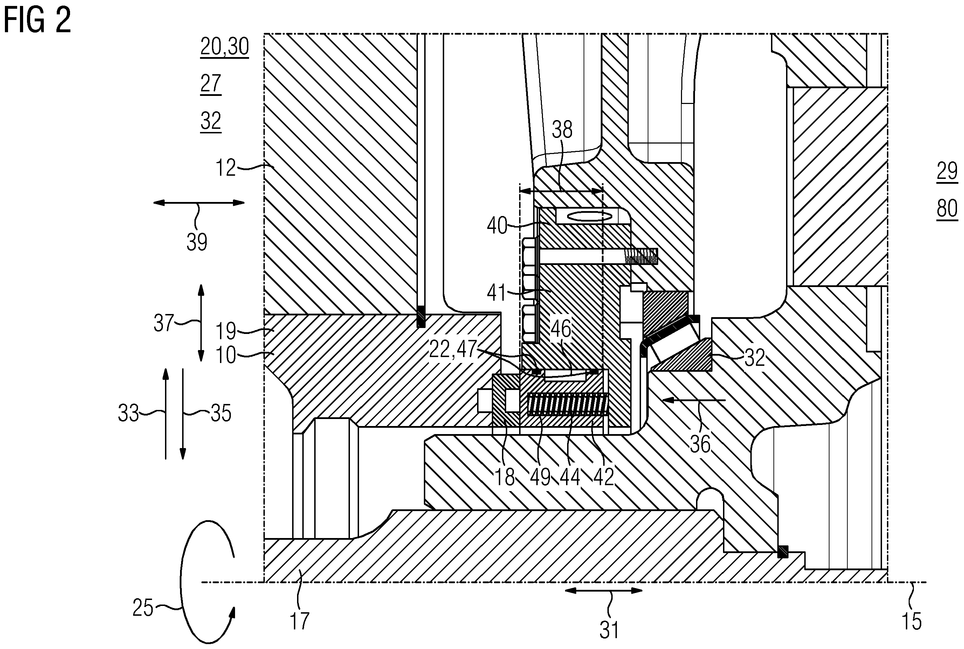

FIG 2 zeigt die erste Ausführungsform der beanspruchten Planetenträgeranordnung 30 in einer anderen Schnittebene im Längsschnitt. Im axial elastisch beweglichen Druckring 42 ist zumindest eine Ausnehmung 49 ausgebildet, in der das zumindest eine Federelement 44 zumindest teilweise aufgenommen ist. Das Federelement 44 ist als Schraubenfederausgebildet, die auf dem axial elastisch beweglichen Druckring 42 die Rückstellkraft 36 ausübt, durch die der axial elastisch bewegliche Druckring 42 gegen den Dichtring 18 gedrückt wird. Nahezu die gesamte axiale Breite 38 des axial elastisch beweglichen Druckrings 42 ist für die Ausnehmung 49 nutzbar. Je tiefer die Ausnehmung 49 in Axialrichtung 31 ausgebildet ist, umso präziser ist das Federelement 44 führbar. Die Planetenräderanordnung 30 nach FIG 2 erlaubt somit den Einsatz von vergrößerten Federelementen 44, die ohne Weiteres als standardisierte Komponenten verfügbar sind. Die Verwendung von kompakten und gleichzeitig besonders steifen oder belastbaren Federelementen 44 ist folglich entbehrlich.

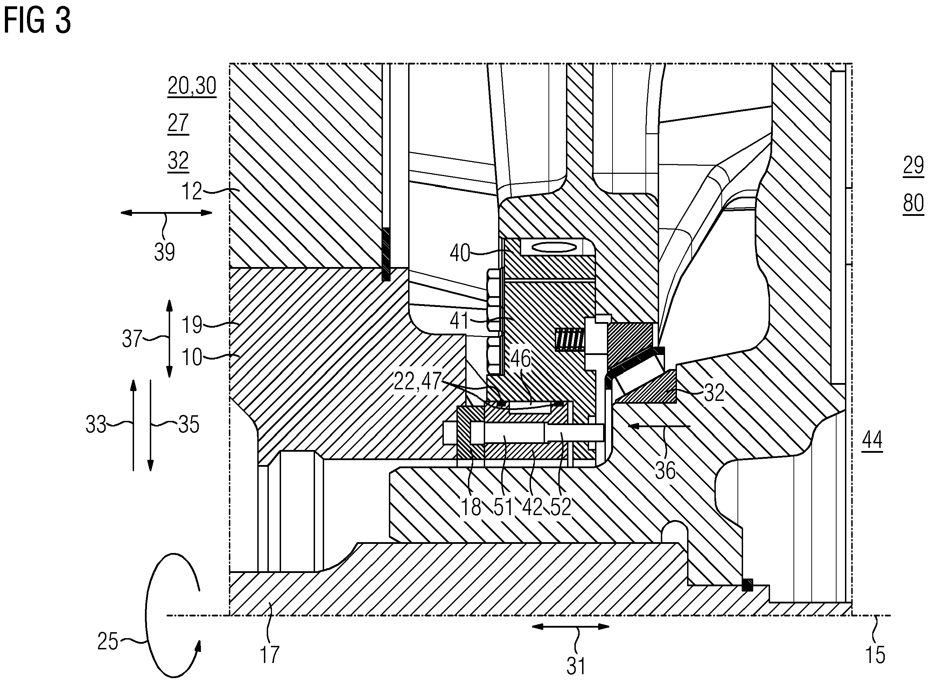

Ein weiterer Längsschnitt durch die erste Ausführungsform der beanspruchten Planetenträgeranordnung 30 nach FIG 1 und FIG 2 ist in FIG 3 dargestellt. Im axial elastisch beweglichen Druckring 42 ist zumindest eine Halteöffnung 51 ausgebildet, in der ein Befestigungsmittel 52 aufgenommen ist, das als Bolzen ausgebildet ist. Das Befestigungsmittel 52 hält den axial elastisch beweglichen Druckring 42 am Stator 41 und begrenzt dessen axiale Bewegung in Richtung der Rückstellkraft 36, die vom zumindest einen Federelement 44 ausgeübt wird. Durch das Befestigungsmittel 52 wird ein Verdrehen des axial elastisch beweglichen Druckrings 42 in Umfangsrichtung begrenzt. Die Umfangsrichtung ist dabei in Bezug auf die Hauptdrehachse 15 aufzufassen. Dadurch ist gewährleistet, dass stets ein Durchleiten von Schmierstoff 45 in den Planetenträger 10 möglich ist. Die Ausführungsform nach FIG 3 ist vormontierbar, so dass bei einer Endmontage ein Blindmontagevorgang vermieden wird.

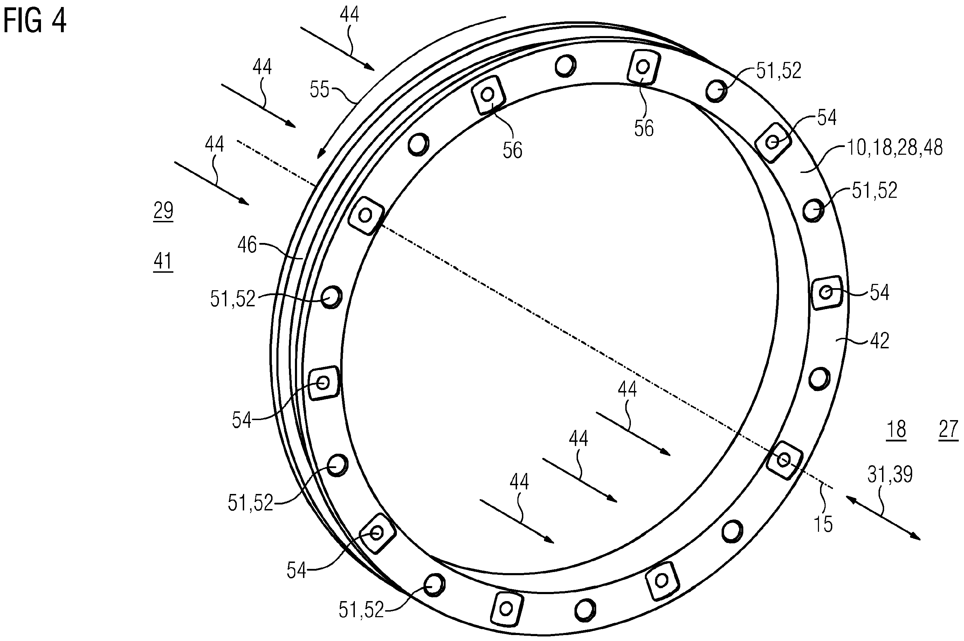

FIG 4 zeigt in einer Schrägansicht eine Ausführungsform eines axial elastisch beweglichen Druckrings 42, der in unterschiedlichen Ausführungsformen der beanspruchten Planetenträgeranordnung 30 einsetzbar ist. Radial außen am Druckring 42 ist eine umlaufende Zufuhrnut 46 ausgebildet, durch die Schmierstoff 45 aus einem nicht näher gezeigten Stator 41 zuführbar ist. Die Zufuhrnut 46 ist mit einer Mehrzahl an Schmierstoffabgabeöffnungen 54 hydraulisch verbunden, die an einer Stirnfläche 48 ein einer Rotorseite 27 münden, die im montierten Zustand einem Dichtring 18 oder einem Planetenträger 19 gegenüberliegt. Die Schmierstoffabgabeöffnungen 54 sind in Umfangsrichtung 55 auf der Stirnfläche 48 regelmäßig beabstandet ausgebildet. Ferner ist jeweils im Bereich der Schmierstoffabgabeöffnungen 54 an der Stirnfläche 48 eine Schmierstofftasche 56 ausgebildet, die bei der Übergabe des Schmierstoffs 45 als Puffer dient. Dadurch wir eine gleichmäßige und zuverlässige Schmierstoffversorgung des Planetenträgers 10 gewährleistet. Zwischen den Schmierstofftaschen 56 ist jeweils eine Halteöffnung 51 ausgebildet, in denen jeweils ein Befestigungsmittel 52 aufnehmbar ist. Durch die Befestigungsmittel 52 ist der Druckring 42 im Betrieb gegen ein Verdrehen entlang der Umfangsrichtung 55 gesichert. Ferner sind Federelemente 44 auf einer der Stirnfläche 48 entgegengesetzten Seite in den Druckring 42 einsetzbar, die in FIG 4 nicht näher gezeigt ist. Das Einsetzen der Federelemente 44 von einer Generatorseite 29 her ist in FIG 4 lediglich mit Pfeilen versinnbildlicht. Durch die Federelemente 44 ist der Druckring 42 entlang einer Axialrichtung 31 parallel zu einer Hauptdrehachse 15 der Planetenträgeranordnung 30 elastisch beweglich. Dies erlaubt ein Ausgleichen eines Axialversatzes 39 des Planetenträgers 10, mit der der Druckring 42 im montierten Zustand zusammenwirkt.

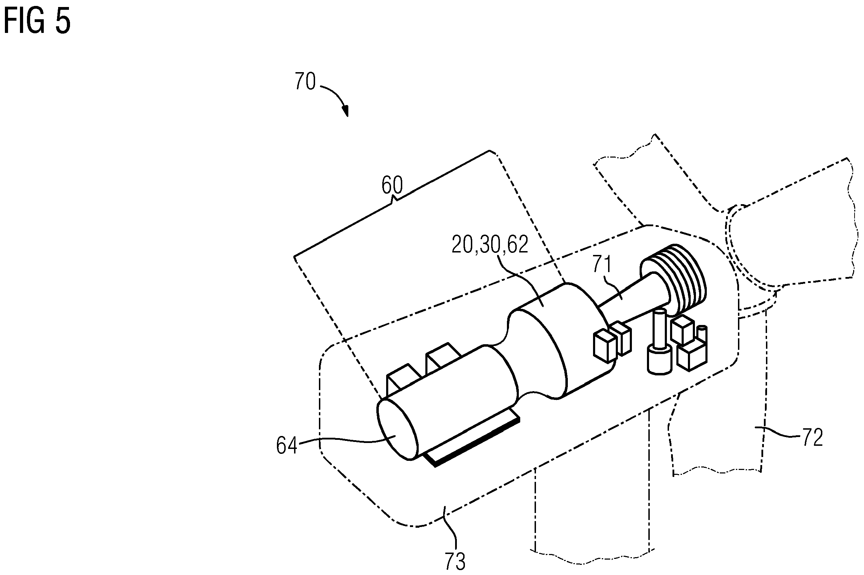

In FIG 5 ist eine Ausführungsform einer beanspruchten Windkraftanlage dargestellt. Die Windkraftanlage 70 umfasst einen Mehrblattrotor 72, der drehbar an einer Gondel 73 angebracht ist. Der Mehrblattrotor 72 ist mit einer Rotorwelle 71 verbunden, die wiederum drehmomentübertragend mit einem Antriebsstrang 60 verbunden ist. Der Antriebsstrang 60 verfügt über ein Getriebe 62, das mit einem Generator 64 gekoppelt ist. Das Getriebe 62 ist als Planetengetriebe 20 ausgebildet, das zumindest eine Planetenträgeranordnung 30 aufweist. Die Planetenträgeranordnung 30 ist hierbei gemäß einer der oben skizzierten Ausführungsformen ausgebildet. Die Planetenträgeranordnung 30 ist ferner in einem Computerprogrammprodukt 80 abgebildet, so dass dessen Betriebsverhalten, insbesondere in einem Betrieb der Windkraftanlage 70, simulierbar ist.

## Patentansprüche

1. Planetenträgeranordnung (30), umfassend eine Schmierstoffabgabeeinheit (40) zur Abgabe von Schmierstoff (45) in einen Planetenträger (10), **dadurch gekennzeichnet, dass** die Schmierstoffabgabeeinheit (40) einen axial elastisch beweglichen Druckring (42) zu einem Ausgleich eines Axialversatzes (39) des Planetenträgers (10) aufweist.

2. Planetenträgeranordnung (30) nach Anspruch 1, **dadurch gekennzeichnet, dass** zwischen dem axial elastisch beweglichen Druckring (42) und einem Stator (41) der Schmierstoffabgabeeinheit (40) zumindest ein Federelement (44) angeordnet ist.

3. Planetenträgeranordnung (30) nach Anspruch 1 oder 2, **dadurch gekennzeichnet, dass** am Planetenträger (10) ein Dichtring (18) zu einem Aufnehmen von Schmierstoff (45) aus dem axial elastisch beweglichen Druckring (42) angebracht ist.

4. Planetenträgeranordnung (30) nach einem der Ansprüche 2 oder 3, **dadurch gekennzeichnet, dass** der axial elastisch bewegliche Druckring (42) über zumindest ein Befestigungsmittel (52) gegenüber dem Stator (41) gegen Verdrehen gesichert ist.

5. Planetenträgeranordnung (30) nach einem der Ansprüche 2 bis 4, **dadurch gekennzeichnet, dass** zwischen einer radialen Außenfläche (47) des axial elastischen Druckrings (42) und dem Stator (41) zumindest ein Dichtelement (22) angeordnet ist.

6. Planetenträgeranordnung (30) nach einem der Ansprüche 1 bis 5, **dadurch gekennzeichnet, dass** der Planetenträger (10) zumindest auf einer seiner Seiten lagerfrei in einem Gehäuse (23) aufgenommen ist.

7. Planetenträgeranordnung (30) nach einem der Ansprüche 1 bis 6, **dadurch gekennzeichnet, dass** der axial elastische bewegliche Druckring (42) einer Nabe (19) des Planetenträgers (10) gegenüberliegend angeordnet ist.

8. Planetenträgeranordnung (30) nach einem der Ansprüche 1 bis 7, **dadurch gekennzeichnet, dass** an einer dem Planetenträger (10) zugewandten Seite des axial elastisch beweglichen Druckrings (42) zumindest eine Schmierstofftasche (56) ausgebildet ist.

9. Planetenträgeranordnung (30) nach einem der Ansprüche 1 bis 8, **dadurch gekennzeichnet, dass** der axial elastisch bewegliche Druckring (42) einen lichten Innendurchmesser (43) von mindestens 150 mm aufweist.

10. Planetenträgeranordnung (30) nach einem der Ansprüche 2 bis 9, **dadurch gekennzeichnet, dass** das zumindest eine Federelement (44) als Schraubenfeder, Tellerfeder, Ringfeder, Evolutfeder oder Elastomerkörper ausgebildet ist.

11. Planetengetriebe (20), umfassend zumindest eine Planetenstufe (11, 21), in der eine Planetenträgeranordnung (30) angeordnet ist, **dadurch gekennzeichnet, dass** die Planetenträgeranordnung (30) nach einem der Ansprüche 1 bis 10 ausgebildet ist.

12. Planetengetriebe (20) nach Anspruch 11, **dadurch gekennzeichnet, dass** das Planetengetriebe (20) zumindest drei Planetenstufen (11, 21) umfasst.

13. Planetengetriebe (20) nach Anspruch 11 oder 12, **dadurch gekennzeichnet, dass** im Planetenträger (10) der Planetenträgeranordnung (30) zumindest drei Planetenräder (14) drehbar aufgenommen sind.

14. Antriebsstrang (60) für eine Windkraftanlage, der ein Getriebe (62) umfasst, das drehmomentübertragend mit einer Rotorwelle (71) verbindbar ist und einen Generator (64), der drehmomentübertragend mit dem Getriebe (62) verbunden ist, **dadurch gekennzeichnet, dass** das Getriebe (62) als Planetengetriebe (20) nach einem der Ansprüche 11 bis 13 ausbildet ist.

15. Windkraftanlage (70), umfassend eine Gondel (73), an der drehbar ein Mehrblattrotor (72) angebracht ist, der drehmomentübertragend mit einem Antriebsstrang (60) verbunden ist, **dadurch gekennzeichnet, dass** der Antriebsstrang (60) nach Anspruch 14 ausgebildet ist.

16. Computerprogrammprodukt (80) zum Simulieren eines Betriebsverhaltens einer Planetenträgeranordnung (30), **dadurch gekennzeichnet, dass** die Planetenträgeranordnung (30) nach einem der Ansprüche 1 bis 10 ausgebildet ist.
